(19) Europäisches Patentamt
European Patent Office
Office européen des brevets

(11) **EP 2 617 492 A1**

(12) **EUROPEAN PATENT APPLICATION**
published in accordance with Art. 153(4) EPC

(43) Date of publication:
**24.07.2013 Bulletin 2013/30**

(51) Int Cl.:
***B01J 35/02*** (2006.01)  ***A61L 9/00*** (2006.01)
***A61L 9/01*** (2006.01)  ***B01D 39/20*** (2006.01)
***B01J 27/12*** (2006.01)

(21) Application number: **11825231.1**

(22) Date of filing: **15.09.2011**

(86) International application number:
**PCT/JP2011/071078**

(87) International publication number:
**WO 2012/036231 (22.03.2012 Gazette 2012/12)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.12.2010 JP 2010292766
15.09.2010 JP 2010206913**

(71) Applicant: **International Frontier Technology
Laboratory Inc.
Tokyo 105-0001 (JP)**

(72) Inventors:
• **KOMATSU, Nobuaki**
**Tokyo 105-0001 (JP)**
• **ITO, Tomoko**
**Tokyo 173-0005 (JP)**
• **NAGAI, Hiroki**
**Hachiouji-shi**
**Tokyo 192-0073 (JP)**
• **NANJO, Shin-ichiro**
**Tokyo 174-0064 (JP)**

(74) Representative: **Pfenning, Meinig & Partner GbR
Theresienhöhe 13
80339 München (DE)**

(54) **GLASS WITH PHOTOCATALYTIC FUNCTION**

(57) Provided is an inexpensive material having a photocatalytic action. A photocatalyst is obtained by halogenation-treating glass fibers containing silicon dioxide in its components. Fused quartz, soda-lime glass, non-alkali glass, and borosilicate glass may be used for the glass. Hydrofluoric acid, hydrochloric acid and hydrobromic acid may be used for the halogen acid, and hydrofluoric acid is most desirable. The glass can be particulate, fibrous or sheet form material. The glass exhibits a photocatalytic action even with visible light other than ultraviolet light, and also water repellent effect. The glass according to the invention is capable of decomposing organic substances, and therefore, it is used for window glass in buildings or in transportation such as automobiles, when formed in a plate shape, and for a filter in an air intake/exhaust apparatus, when formed in fibrous shape.

EP 2 617 492 A1

**Description**

Technical Field

The present invention relates to a photocatalyst material capable of being sensitized to a light in a wide wavelength range to decompose a hazardous organic substance so that the substance is effectively changed to be nonhazardous, and a filter formed using the photocatalyst material as the application thereof.

Background Art

A photocatalytic reaction is a reaction which proceeds due to light irradiation wherein the reaction is caused only when high energy is applied thereto, and, as photocatalyst materials, there have been known so-called semiconductor catalysts, such as titanium dioxide, zinc oxide, cadmium sulfide, and tungsten oxide, and metal complexes, such as a ruthenium bipyridyl complex.

Of these materials, titanium dioxide is the most stable and exhibits almost no biological toxicity, and therefore is widely used for various chemical reactions and as a photocatalyst for environmental cleaning.

When this photocatalyst is irradiated with a near ultraviolet light at around 400 nm, electrons present in the filled band are excited to be in the conduction band to cause a charge separated structure, so that hydroxide radicals or superoxide anions are generated at the thus caused charged site and their strong oxidizing action decomposes an environmental pollutant, such as an organohalogen compound and NOx.

In an air intake apparatus for a site of semiconductor production facilities, medical facilities, such as an operating room, pharmaceuticals production facilities, or foods production facilities, or in an air exhaust apparatus for nuclear power facilities, a HEPA filter (High Efficiency Particulate Air filter) formed from glass fibers is used.

According to JIS, the HEPA filter is "an air filter having a particle collection efficiency of 99.97% or more with respect to the particles having a particle diameter of 0.3 $\mu$ m at a rated air delivery, and having performance such that the initial loss is 245 Pa or less".

In the HEPA filter, the filter portion is generally packed with glass fibers having a diameter of 1 to 10 $\mu$ m or less at a packing ratio of about 10% so that several tens $\mu$ m voids are present in the filter portion.

In the supplied/exhaust air, in addition to the particles having a particle diameter of 0.3 $\mu$ m or more which particles are to be collected by the HEPA filter, a variety of liquid or gaseous organic substances are present, and these substances cannot be removed by the HEPA filter.

When the particles and the like which cannot be removed by the HEPA filter are hazardous to the site to which air is supplied, such hazardous substances are changed to be nonhazardous using another means, which causes the air intake and exhaust apparatus be complicated and the cost increase.

In many cases, glass fibers are used for filters including the HEPA filter.

Glass fibers consist primarily of silicon dioxide, and silicon dioxide is a stable material, has a low chemical activity, and hence cannot be expected to exhibit a catalytic action to change a hazardous substance to be nonhazardous.

As a method for imparting the chemical activity to silicon dioxide which is a stable material, there have been proposed some methods in which fine particles of synthetic quartz, which is an almost pure silicon dioxide crystal, are treated with halogen acid, such as hydrofluoric acid (HF), to have a photocatalytic ability.

WO2005/089941, JP-A-2006-511175, JP-A-2007-098205, JP-A-2007-098206 and JP-A-2007-307430 shows the photocatalytic ability in which fine particles of synthetic quartz, being a pure crystal of silicon dioxide (SiO2), which is inexpensive and stable, used as a substitute for titanium dioxide, are treated with hydrofluoric acid (HF).

JP-A-2007-098205 shows a photocatalyst material where natural quartz or synthetic quartz is supported on a particulate inorganic or organic material.

JP-A-2004-290747 and JP-A-2004-290748 show a photocatalyst material where quartz (silicon dioxide) glass in a sheet form, a particulate form, a powdery form, a block form, or a fibrous form is used and halogenation-treated with hydrofluoric acid, hydrochloric acid or hydrobromic acid.

JP-A-2007-098206 shows a photocatalyst material where particulate silicon dioxide, such as natural silica, synthetic silica, fused quartz or silica sol is used and its fine particles are halogenation-treated with hydrofluoric acid.

The publication also shows a photocatalyst material where natural silica, synthetic silica, fused quartz, silica sol, or the like is supported on a particulate inorganic or organic material.

JP-A-2007-098205 shows a photocatalyst material where natural quartz or synthetic quartz is used and its fine particles are halogenation-treated with hydrofluoric acid.

The publication also shows the photocatalyst material supported on a particulate inorganic or organic material.

JP-A-2007-098206 shows a photocatalyst material where particulate silicon dioxide, such as natural silica, synthetic silica, fused quartz or silica sol is used and its fine particles are halogenation-treated with hydrofluoric acid.

The publication also shows the photocatalyst material supported on a particulate inorganic or organic material.

JP-A-2007-307430 shows a photocatalyst material where fine particles of synthetic quartz are supported on a particulate inorganic or organic material.

Prior Art References

Document 1: WO2005/089941
Document 2: JP-A-2004-290747
Document 3: JP-A-2004-290748
Document 4: JP-A-2006-511175
Document 5: JP-A-2007-098205
Document 6: JP-A-2007-098206
Document 7: JP-A-2007-307430
Document 8: JP-A-2007-098205

Summary of the Invention

Object of The Invention

It is an object in this application to obtain an inexpensive photocatalyst material.

It is an object in this application to obtain a photocatalyst having a form other than the form of fine particles.

It is an object in this application to obtain a photocatalyst capable of using a light other than an ultraviolet light.

It is an object in this application to obtain a filter having a photocatalytic action.

It is an object in this application to obtain an air intake and exhaust apparatus using a filter having a photocatalytic action.

Means

The inventors have found that a photocatalytic action can be obtained from a material in which a silicon dioxide-containing material, including soda-lime glass, non-alkali glass, and borosilicate glass is treated with hydrofluoric acid.

The inventors have found that a photocatalytic action can be obtained from a material in which a silicon dioxide-containing material, including soda-lime glass, non-alkali glass, and borosilicate glass is treated with hydrofluoric acid.

The inventors have found that a photocatalytic action can be obtained from a material in which a silicon dioxide-containing material, including soda-lime glass, non-alkali glass, and borosilicate glass is treated with halogen acid.

The inventors have found that a material in a sheet or fibrous form other than the form of fine particles has a photocatalytic action, based on the silicon dioxide-containing material which is not treated with halogen acid.

The inventors have found that a material in which soda-lime glass, such as used in window glass, is treated with hydrofluoric acid has a photocatalytic action.

According to the above finding, the inventors provide arrangements as mentioned below.

In this application, as means for achieving the above-mentioned objects of the invention based on the finding, a soda-lime glass material treated with halogen acid is provided as a photocatalyst.

In this application, the following means are provided for achieving the objects.

A photocatalyst material which is soda-lime glass treated with halogen acid.

A photocatalyst material which is glass fibers treated with halogen acid.

A filter having a photocatalytic action comprising glass fibers treated with halogen acid.

An air intake and exhaust apparatus using a filter having a photocatalytic action comprising soda-lime glass fibers treated with halogen acid.

Further specific arrangements are as follows.

(1) A glass having a photocatalytic action in which glass containing a component other than silicon dioxide is treated with halogen acid.

(2) The glass having a photocatalytic action according to (1) above, wherein the glass containing a component other than silicon dioxide is soda-lime glass.

(3) The glass having a photocatalytic action according to (1) above, wherein the glass containing a component other than silicon dioxide is non-alkali glass.

(4) The glass having a photocatalytic action according to (1) above, wherein the glass containing a component other than silicon dioxide is borosilicate glass.

(5) The glass having a photocatalytic action according to (1) above, wherein the halogen acid is hydrofluoric acid.

(6) The glass having a photocatalytic action according to (1) above, wherein the halogen acid is hydrochloric acid.

(7) The glass having a photocatalytic action according to (1) above, wherein the halogen acid is hydrobromic acid.

(8) The glass having a photocatalytic action according to (1) above, wherein the glass is a particulate material.

(9) The glass having a photocatalytic action according to (1) above, wherein the glass is a fibrous material.

(9) The glass having a photocatalytic action according to (1) above, wherein the glass is a sheet-form material.

(10) A filter in which the glass containing a silicon dioxide component treated with halogen acid is formed in a fibrous configuration.

(11) An air intake and exhaust apparatus using a filter formed in a fibrous configuration obtained by treating glass containing a silicon dioxide component with a halogen acid.

Advantages of the Invention

By the above-mentioned means, the following effects can be obtained.
The soda-lime glass treated with halogen acid decomposes an organic pollutant when irradiated with a light.
From glass fibers treated with halogen acid, when forming woven fabric or nonwoven fabric, a filter having a photocatalytic action can be obtained.
The soda-lime glass plate treated with halogen acid decomposes an organic substance when irradiated with an ultraviolet light or a visible light.
Further, the soda-lime glass plate treated with halogen acid exhibits a catalytic action even when the surface of the glass plate is smooth and transparent.

Mode for Carrying Out the Invention

With respect to the measurement of photocatalytic action, the basic photocatalytic action was measured by testing using methylene blue, and the practical photocatalytic action was measured by decomposition testing for acetaldehyde which is one of the substances causing a sick house syndrome.

<Test using methylene blue>

The test was conducted as follows.
A sample was washed and dried, and then placed in aqueous methylene blue solution and irradiated with an ultraviolet light having the wavelength of 300 to 400 nm from a black light for 24 hours, and, from the change in the absorbance with respect to a light having a wavelength of 664 nm between the methylene blue before and after the irradiation, the fading ratio of the aqueous methylene blue solution was determined.
Further, the sample in the aqueous solution was placed in a dark place for 24 hours, and the adsorption ratio of methylene blue onto the sample was determined.
As the aqueous solution of methylene blue, there was used one obtained by adding 495 mL of purified water to 5 mL of the aqueous methylene blue solution, which had been obtained by adding purified water to 0.0374 g of methylene blue trihydrate (MW = 374) so as to make the resultant solution volume 100 mL, so that the aqueous solution had 0.01 mmol/L concentration.
The fading ratio was determined by placing the sample in 20 mL of the methylene blue reagent contained in a polystyrene container and irradiating the reagent with an ultraviolet light having a wavelength of 300 to 400 nm from a black light in a dark room for 24 hours, and measuring the change in the absorbance with respect to a light having the wavelength of 664 nm between the methylene blue reagent before and after the irradiation.
Based on the results of the measurement of absorbance, the fading ratio (%) of the methylene blue reagent was determined by calculating using the Lambert-Beer's equation as shown below, obtaining methylene blue reagent decomposition ratio for the sample.

$$100 - \text{Abs (24 h)}/\text{Abs (0 h)} \times 100 = \text{Fading ratio (\%)}.$$

Wherein Abs (24 h) is the absorbance ratio after the irradiation for 24 hours, and
Abs (0 h) is the absorbance ratio before the irradiation.
Further, for checking the change of the absorbance, the sample in the reagent was placed in the dark place for 24 hours, and the adsorption ratio (%) of methylene blue onto the sample was measured, and the difference (%) between the fading ratio and the adsorption ratio, which is considered as a true catalytic action, was determined by calculation.

<Test of acetaldehyde decomposition>

An acetaldehyde decomposition test was conducted as follows.
A sample was washed and dried, and then placed in an acetaldehyde atmosphere in which the concentration was 5.0 ppm and the gas flow rate was 1.0 L/minute, and irradiated with an ultraviolet light having the wavelength of 300 to 400 nm from a black light to measure the amount of acetaldehyde decomposed per unit time and the amount of carbon dioxide generated per unit time due to the decomposition of acetaldehyde.
In Embodiments 1, 2, and 3, examples using noncrystalline glass as a photocatalyst instead of the crystalline quartz are described.

Embodiment 1

<Soda-lime glass particles>

In Embodiment 1, an example using soda-lime glass particles as a photocatalyst is described.
A sample 1 is obtained by immersing glass fibers formed from soda-lime glass, which is generally used and has a basic composition, excluding the components of which content is less than 1%, where $SiO_2$ is 71.9%, CaO is 7.8%, $Al_2O_3$ is 1.7%, MgO is 4.0%, and $Na_2O$ is 13.3%, in an aqueous solution of hydrofluoric acid having 10% concentration for 5 minutes, and washing the resultant glass fibers and drying them, and pulverizing the dried glass fibers into particles having a particle diameter of 0.2 mm.
The thus obtained glass sample was immersed in the aqueous methylene blue solution, and irradiated with a visible light for 70 hours or placed in a dark place for 70 hours. On the resultant sample, the fading ratio of methylene blue between before and after the irradiated or placed in the dark was determined.

With respect to the sample 1 which was treated with hydrofluoric acid, the fading ratio of methylene blue was 42%. With respect to the sample 1, when not treated with hydrofluoric acid, the fading ratio of methylene blue was 22%.

As apparent from the above data, in the sample 1 the soda-lime glass is, when not treated with hydrofluoric acid, effective on the fading of methylene blue, and when treated with hydrofluoric acid, further effective.

Embodiment 2

<Non-alkali glass>

A sample 2 is non-alkali glass having a basic composition, excluding the components of which content is less than 1%, where $SiO_2$ is 55.0%, CaO is 23.0%, $Al_2O_3$ is 14.2%, and $B_2O_3$ is 6.2%.

With respect to the sample 2 which was treated with hydrofluoric acid, the fading ratio of methylene blue was 42%. With respect to the sample 2, when not treated with hydrofluoric acid, the fading ratio of methylene blue was 16%.

As apparent from the above data, in the sample 2 the non-alkali glass is, when not treated with hydrofluoric acid, effective on the fading of methylene blue, and when treated with hydrofluoric acid, further effective.

Embodiment 3

<Borosilicate glass>

A sample 3 is borosilicate glass having a basic composition, excluding the components of which content is less than 1%, where $SiO_2$ is 33.0%, CaO is 6.8%, $Al_2O_3$ is 1.3%, $B_2O_3$ is 37.4%, MgO is 5.5%, and $Na_2O$ is 16.0%.

With respect to the sample 3 which was treated with hydrofluoric acid, the fading ratio of methylene blue was 26%. With respect to the sample 3, when not treated with hydrofluoric acid, the fading ratio of methylene blue was 16%.

As apparent from the above data, in the sample 3 the borosilicate glass is, when not treated with hydrofluoric acid, effective on the discoloration ratio of methylene blue, and when treated with hydrofluoric acid, further effective.

Embodiment 4

<Glass fibers>

A photocatalyst using fibrous glass instead of the particulate glass is described.

<Test using methylene blue>

The fading ratio using glass fibers was determined by placing 1 g of glass fibers treated with hydrofluoric acid in 100 mL of the methylene blue reagent contained in a quartz glass container, and irradiating the reagent with a visible light from a fluorescent light for 24 hours, and measuring the absorbance of the methylene blue reagent with respect to a light having the wavelength of 664 nm before and after the irradiation.

Based on the measurement results of absorbance, the fading ratio (%) of the methylene blue reagent was determined by calculating using the above-shown Lambert-Beer's equation, obtaining a methylene blue reagent decomposition ratio for the sample.

A sample 4 is obtained by immersing soda-lime glass fibers which are general glass fibers comprised in soda-lime glass generally used, having a basic composition, excluding the components of which content is less than 1%, where $SiO_2$ is 71.9%, CaO is 7.8%, $Al_2O_3$ is 1.7%, MgO is 4.0%, and $Na_2O$ is 13.3%, in the aqueous solution of hydrofluoric acid having the concentration of 0.05%, 0.1%, 0.5%, or 1% for 5 minutes, and washing the resultant glass fibers and drying them.

With respect to the sample 4, the fading ratio of methylene blue of 12 to 23% was obtained. With respect to the same soda-lime glass fibers which have not been immersed in hydrofluoric acid, the fading ratio of methylene blue is 7%.

Embodiment 5

<Glass plate>

A photocatalyst using sheet-formed glass instead of the particulate or fibrous glass is described. In Embodiment 5, an example using a glass plate of the above-mentioned soda-lime glass is described.

A soda-lime glass plate having the thickness of 1 mm was cut into 30 X 30 $mm^2$, and the cut sheet each was immersed in the hydrofluoric acid solution having different concentrations for different periods of time, and then washed with water and dried to obtain a test specimen.

With respect to samples 5 to 14 which are the test specimens treated with hydrofluoric acid solutions having different concentrations for different periods of time for the treatment, the fading ratio (%), the adsorption ratio (%), and the difference (%) are shown below.

The sample 5 is a specimen treated by immersion in hydrofluoric acid having the concentration of 5% for 5 minutes.

With respect to the sample 5, the fading ratio was 15%, the adsorption ratio was 15%, and the difference was 0%.

The sample 6 is a specimen treated by immersion in hydrofluoric acid having the concentration of 10% for 5 minutes.

With respect to the sample 6, the fading ratio was 14%, the adsorption ratio was 15%, and the difference was -1%.

The sample 7 is a specimen treated by immersion in hydrofluoric acid having the concentration of 1% for 5 minutes.

With respect to the sample 7, the fading ratio was 16%, the adsorption ratio was 15%, and the difference was 1%.

The sample 8 is a specimen treated by immersion in hydrofluoric acid having the concentration of 10% for 10 minutes.

With respect to the sample 8, the fading ratio was 21%, the adsorption ratio was 16%, and the difference was 5%.

The sample 9 is a specimen treated by immersion in hydrofluoric acid having the concentration of 20% for 5 minutes.

With respect to the sample 9, the fading ratio was 19%, the adsorption ratio was 14%, and the difference was 5%.

Observation was made on the fading ratio, the adsorption ratio, and these differences with respect to the samples 5 to 9. As a result, it was found that the sample 8 having the fading ratio of 21% and the adsorption ratio of 16% and the sample 9 having the fading ratio of 19% and the adsorption ratio of 14% were useful.

For further checking the treatment conditions, samples 10 to 14 were prepared under conditions of the hydrofluoric acid having the fixed concentration (20%) and the time changed for immersion treatment. The measurement was similarly performed with respect to the prepared samples.

The sample 10 is a specimen treated by immersion in the hydrofluoric acid for 15 minutes.

With respect to the sample 10, the fading ratio was 22%, the adsorption ratio was 11%, and the difference was 11%.

The sample 11 is a specimen treated by immersion in the hydrofluoric acid for 15 minutes.

With respect to the sample 11, the fading ratio was 13%, the adsorption ratio was 5%, and the difference was 8%.

The sample 12 is a specimen treated by immersion in the hydrofluoric acid for 15 minutes in the same manner as in the sample 7.

With respect to the sample 12, the fading ratio was 13%, which is the same as in sample 7, but the adsorption ratio was as large as 11% and the difference was 2%.

The sample 13 is a specimen treated by immersion in the hydrofluoric acid for 20 minutes.

With respect to the sample 13, the fading ratio was 15%, the adsorption ratio was 8%, and the difference was 7%.

In this connection, it should be noted that the sample 13 exhibited water repellency which is presumed to be a Lotus effect.

The sample 14 is a specimen treated by immersion in the hydrofluoric acid for 30 minutes.

With respect to the sample 14, the fading ratio was as small as 2%, but the adsorption ratio was 0%, and hence the difference was 2%.

The samples 11 and 12 which had been treated under the same conditions exhibited different adsorption ratios. Therefore, for the purpose of checking the variation in the samples treated under the same conditions, prepared samples 15 to 19 were treated under the same conditions of the concentration 20% and the time for immersion treatment 15 minutes. On these samples 15 to 19, the fading ratio, the adsorption ratio, and the difference are as below.

With respect to the sample 15, the fading ratio was 22%, the adsorption ratio was 11%, and the difference was 11%.

With respect to the sample 16, the fading ratio was 13%, the adsorption ratio was 5%, and the difference was 8%.

With respect to the sample 17, the fading ratio was 13%, the adsorption ratio was 11%, and the difference was 2%.

With respect to the sample 18, the fading ratio was 8%, the adsorption ratio was 6%, and the difference was 2%.

With respect to the sample 19, the fading ratio was 8%, the adsorption ratio was 8%, and the difference was 0%.

There shows variation on these samples, but it is apparent that the above-shown samples have the catalytic action to decompose methylene blue.

<Reference Example>

In order to compare with the catalytic action of the blue glass plate treated with hydrofluoric acid, a comparative sample was prepared by applying titanium dioxide onto a soda-lime glass substrate to form anatase type titanium dioxide.

With respect to the comparative sample, the fading ratio was 29%, the adsorption ratio was 25%, and the difference was 4%.

<Acetaldehyde decomposition test>

A sample 20 used in an acetaldehyde decomposition test is soda-lime glass generally used, which is the same as used in embodiments 1 to 15, and which has a basic composition, excluding the components of which content is less than 1%, where $SiO_2$ is 71.9%, CaO is 7.8%, $Al_2O_3$ is 1.7%, MgO is 4.0%, and $Na_2O$ is 13.3%.

The sample 20 is a specimen obtained by immersing soda-lime glass having the thickness of 1 mm in hydrofluoric acid having the concentration of 20% for 15 minutes in the same manner as in the samples 10 to 12, and then washing the resultant glass with water and drying it, and cutting the glass into $50 \times 100$ mm$^2$.

With respect to the sample 20, the amount of acetaldehyde decomposed per unit time was 0.98 $\mu$ mol/hour and the amount of carbon dioxide generated per unit time was 1.38 $\mu$ mol/hour, and the acetaldehyde removal ratio was 7.11% and the conversion to carbon dioxide ratio was 5%.

As apparent from the above results, the soda-lime glass in the sample 20 has a practical catalytic action with respect to acetaldehyde.

Finally, for getting the methylene blue fading under general use conditions, a sample 21 treated under the same conditions as those for the soda-lime glass in the sample 20 was irradiated with a visible light having the wavelength of 400 to 710 nm from a fluorescent lamp, from which an ultraviolet light had been removed by an ultraviolet light filter, for 6 hours. As a result, the fading ratio of 4% was obtained.

As apparent from the above results, the soda-lime glass in the sample 20 has a practical catalytic action with respect to acetaldehyde.

Industrial Applicability

The soda-lime glass treated with halogen acid exhibits a photocatalytic action to decompose an organic substance when it is irradiated with a light.

Differing from titanium dioxide which exhibits a catalytic action only when irradiated with an ultraviolet light, the soda-lime glass treated with halogen acid exhibits the catalytic action also when irradiated with a visible light, and thus is extremely efficient and useful.

When forming a woven or nonwoven fabric from the soda-lime glass fibers treated with halogen acid, a filter having a photocatalytic action can be obtained.

The air intake and exhaust apparatus using a filter formed from the glass fibers treated with halogen acid is useful in facilities which are required to remove organic substances therefrom.

The soda-lime glass plate treated with halogen acid according to the invention in the present application, while it is smooth and transparent, exhibits a photocatalytic action to decompose an organic substance when irradiated with a light.

The above glass plate can be used in window glass, and the surface of the glass plate on the side in contact with air can decompose and remove organic pollutants contained in air, and the inside surface can decompose and remove acetaldehyde which is a substance causing a sick house syndrome, oil smoke in a kitchen, cigarette smoke, and the like, and thus the glass plate is useful for the window material in buildings.

Further, when used in window glass for a vehicle, such as an automobile, the glass plate is expected to function to decompose and remove organic substances contained in exhaust gas outside of the vehicle and various organic substances inside of the vehicle.

Furthermore, the glass plate also has a water repellent effect which is presumed to be the Lotus effect, and hence is expected to exhibit a self-cleaning effect due to the water repellent effect, and the glass plate is useful as window glass for buildings in contact with outside air and window glass for transportation, such as a vehicle.

A photocatalytic action with respect to nitrogen oxide, though not measured quantitatively, is qualitatively also recognized.

**Claims**

1. Glass having a photocatalytic action, **characterized by** being glass containing a component other than silicon dioxide, treated with halogen acid.

2. The glass having a photocatalytic action according to claim 1, wherein the glass is soda-lime glass.

3. The glass having a photocatalytic action according to claim 1, wherein the glass is non-alkali glass.

4. The glass having a photocatalytic action according to claim 1, wherein the glass is borosilicate glass.

5. The glass having a photocatalytic action according to claim 1, wherein the halogen acid is hydrofluoric acid.

6. The glass having a photocatalytic action according to claim 1, wherein the halogen acid is hydrochloric acid.

7. The glass having a photocatalytic action according to claim 1, wherein the halogen acid is hydrobromic acid.

8. The glass having a photocatalytic action according to claim 1, wherein the glass is a particulate material.

9. The glass having a photocatalytic action according to claim 1, wherein the glass is a fibrous material.

10. The glass having a photocatalytic action according to claim 1, wherein the glass is a sheet-form material.

11. A filter which is formed from a fibrous material obtained by treating glass containing silicon dioxide with halogen acid.

12. An air intake and exhaust apparatus using a filter which is formed from a fibrous material obtained by treating glass containing silicon dioxide with halogen acid.

| **INTERNATIONAL SEARCH REPORT** | International application No. |
|---|---|
| | PCT/JP2011/071078 |

**A. CLASSIFICATION OF SUBJECT MATTER**
*B01J35/02*(2006.01)i, *A61L9/00*(2006.01)i, *A61L9/01*(2006.01)i, *B01D39/20* (2006.01)i, *B01J27/12*(2006.01)i

According to International Patent Classification (IPC) or to both national classification and IPC

**B. FIELDS SEARCHED**

Minimum documentation searched (classification system followed by classification symbols)
B01J35/02, A61L9/00, A61L9/01, B01D39/20, B01J27/12

Documentation searched other than minimum documentation to the extent that such documents are included in the fields searched
Jitsuyo Shinan Koho           1922-1996   Jitsuyo Shinan Toroku Koho   1996-2011
Kokai Jitsuyo Shinan Koho    1971-2011   Toroku Jitsuyo Shinan Koho   1994-2011

Electronic data base consulted during the international search (name of data base and, where practicable, search terms used)
JSTPlus(JDreamII)

**C. DOCUMENTS CONSIDERED TO BE RELEVANT**

| Category* | Citation of document, with indication, where appropriate, of the relevant passages | Relevant to claim No. |
|---|---|---|
| X<br>Y<br>A | JP 2004-290747 A  (National Institute of Advanced Industrial Science and Technology), 21 October 2004 (21.10.2004), claims; paragraphs [0011] to [0013] (Family: none) | 1,5-10<br>11,12<br>2-4 |
| X<br>Y<br>A | JP 2004-290748 A  (Tokkyo Gijutsu Kaihatsu Kabushiki Kaisha), 21 October 2004 (21.10.2004), claims; paragraphs [0009] to [0011] (Family: none) | 1,5-10<br>11,12<br>2-4 |
| X<br>Y | JP 2004-002176 A  (Nippon Sheet Glass Co., Ltd.), 08 January 2004 (08.01.2004), claims; paragraphs [0001], [0020] to [0026] (Family: none) | 11,12<br>11,12 |

| ☒ Further documents are listed in the continuation of Box C. | ☐ See patent family annex. |
|---|---|

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search<br>07 December, 2011 (07.12.11) | Date of mailing of the international search report<br>20 December, 2011 (20.12.11) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2011/071078

C (Continuation).   DOCUMENTS CONSIDERED TO BE RELEVANT

| Category* | Citation of document, with indication, where appropriate, of the relevant passages | Relevant to claim No. |
|---|---|---|
| X | JP 2006-305563 A (Nippon Muki Co., Ltd.), 09 November 2006 (09.11.2006), claims; paragraphs [0015] to [0022] (Family: none) | 11 |
| X | JP 64-055387 A (Matsushita Electric Industrial Co., Ltd.), 02 March 1989 (02.03.1989), page 3, upper left column, line 20 to upper right column, line 2 (Family: none) | 1,2,5 |
| X | JP 2010-153512 A (Sharp Corp.), 08 July 2010 (08.07.2010), paragraph [0037] (Family: none) | 1,3,5 |
| X | JP 2008-189484 A (Morita Chemical Industries Co., Ltd.), 21 August 2008 (21.08.2008), paragraph [0056] (Family: none) | 1,4,5 |

Form PCT/ISA/210 (continuation of second sheet) (July 2009)

## INTERNATIONAL SEARCH REPORT

| International application No. |
| --- |
| PCT/JP2011/071078 |

| Box No. II | Observations where certain claims were found unsearchable (Continuation of item 2 of first sheet) |

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

| Box No. III | Observations where unity of invention is lacking (Continuation of item 3 of first sheet) |

This International Searching Authority found multiple inventions in this international application, as follows:
The technical feature of the invention in claim 1 is publicly known as disclosed in the documents 1, 2 and 5-7.
Consequently, claims 1-12 are classified into main invention in claims 1 and 2, and inventions in other claims, and therefore involve two or more inventions.
(continued to extra sheet)

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**
☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (July 2009)

**INTERNATIONAL SEARCH REPORT**

International application No.

PCT/JP2011/071078

Continuation of Box No.III of continuation of first sheet(2)

Document 1: JP 2004-290747 A (National Institute of Advanced Industrial Science and Technology)
Document 2: JP 2004-290748 A (Tokkyo Gijutsu Kaihatsu Kabushiki Kaisha)
Document 5: JP 64-055387 A (Matsushita Electric Industrial Co., Ltd.)
Document 6: JP 2010-153512 A (Sharp Corp.)
Document 7: JP 2008-189484 A (Morita Chemical Industries Co., Ltd.)

Form PCT/ISA/210 (extra sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2005089941 A
- JP 2006511175 A
- JP 2007098205 A
- JP 2007098206 A
- JP 2007307430 A
- JP 2004290747 A
- JP 2004290748 A